# EUROPÄISCHE PATENTSCHRIFT

(11) **EP 3 394 140 B1**
(45) Veröffentlichungstag und Bekanntmachung des Hinweises auf die Patenterteilung: **27.01.2021**
(21) Anmeldenummer: 16828738.1
(22) Anmeldetag: 22.12.2016
(51) Int. Cl.: C08G 18/54, C08G 18/79, C08G 18/10, C09D 175/16, B32B 27/00, C08G 18/67, C08F 290/06, C09D 175/14, B32B 5/02, B32B 5/26, B32B 7/04, B32B 9/04, B32B 9/00, B32B 21/10, B32B 25/06, B32B 15/098, B32B 25/08, B32B 25/10, B32B 27/06, B32B 27/08

(54) **SCHICHTPRESSSTOFFPLATTEN UND VERFAHREN ZU IHRER HERSTELLUNG**
LAYER PRESSING MATERIAL PANELS AND METHOD FOR THEIR PREPARATION
PANNEAUX STRATIFIES ET LEUR PROCEDE DE FABRICATION

(30) Priorität: 23.12.2015 EP 15202487
(43) Veröffentlichungstag der Anmeldung: 31.10.2018
(73) Patentinhaber: FunderMax GmbH, 9300 St. Veit an der Glan (AT)
(72) Erfinder: JANNACH, Gerhard, 9300 St. Veit/Glan (AT)
(74) Vertreter: Vossius & Partner Patentanwälte Rechtsanwälte mbB
(86) Internationale Anmeldenummer: PCT/EP2016/082459
(87) Internationale Veröffentlichungsnummer: WO 2017/109118

(56) Entgegenhaltungen:
- EP-A1- 0 846 135
- EP-A2- 0 850 698
- WO-A1-97/33929
- DE-C1- 3 925 451

## Beschreibung

Die Erfindung betrifft eine Schichtpressstoffplatte mit einer Oberflächenlage an mindestens einer Plattenoberfläche, die als äußerste Schicht eine Polymerbeschichtung mit einem Polyurethan(meth)acrylat-Polymer aufweist, und die sich durch eine ausgezeichnete Kratzfestigkeit und Witterungsbeständigkeit auszeichnen. Darüber hinaus wird ein Verfahren zur Herstellung von Polyurethan(meth)acrylat-beschichteten Schichtpressstoffplatten bereit gestellt.

Polyurethanacrylate sind geeignete Bestandteile für Beschichtungen in vielen Anwendungsbereichen. Polyurethanacrylate als Witterungsschutz von dekorativen Oberflächen sind beispielsweise in EP 846135 beschrieben. Bei Anwendungen im Baubereich werden besonders hohe Anforderungen an die dekorativen Oberflächen gestellt. Einerseits an die mechanischen Eigenschaften wie Kratzbeständigkeit und Oberflächenhärte und andererseits an die Bewitterungseigenschaften, im speziellen Klima-, Licht- und UV-Beständigkeit. Darüber hinaus wird nicht nur eine besondere Langlebigkeit der technischen Eigenschaften zum dauerhaften Schutz des Gebäudes, sondern auch der dekorativen Eigenschaften gefordert, Im Speziellen wird eine hohe Farbstabilität sowie eine Konstanz des Glanzgrades der Oberfläche erwartet. In EP 846135 ist diese Aufgabenstellung zum Teil gelöst, jedoch ist die relativ spröde Oberfläche mit gewissen Einschränkungen hinsichtlich der Kratzfestigkeit verbunden. Zusätzlich ist durch die Einwirkung von Witterungseinflüssen der Glanzgrad der Oberfläche einer Veränderung unterworfen.

Alternativen zur Bereitstellung von dekorativen Oberflächen mit Hilfe von strahlungsgehärteten Beschichtungen sind in EP 0166153 A1, EP 0216269 A2, EP 1122062 A2 und WO 2008/147180 beschrieben, die zu sehr kratzfesten Oberflächen führen können. Nachteile solcher Beschichtungen und der Verfahren zu ihrem Aufbringen sind die apparativ aufwändigen, teuren Anlagen sowie eine schlechte Hantierbarkeit des Dekorhalbfabrikates wegen der durch das Härtungsverfahren bedingten starken Rollneigung, die im weiteren Herstellungsprozess zu Ausschuss führt.

Zusätzlich ist aus EP 2152528 B1 ersichtlich, dass für Oberflächen mit besonders geringen Änderungen des Glanzgrades im Laufe der Bewitterung Oberflächenbeschichtungen eingesetzt wurden, für die aufwändige, mehrstufige Härtungsprozesse erforderlich sind.

Zur Einstellung des Glanzgrades werden in der Herstellung der Beschichtungen üblicherweise Additive, wie beispielsweise Mattierungsmittel verwendet. Aus EP338221 A1 ist bekannt, dass ein Mattierungsmittel eine negative Auswirkung auf die Kratzfestigkeit der Oberfläche haben kann. Als Additive, die gezielt an der Oberfläche der Beschichtung deren Struktur beeinflussen, sind sie besonders Witterungseinflüssen und UV-Licht ausgesetzt, weshalb im Laufe der Anwendung eine Änderung des Glanzgrades beobachtet werden kann.

Die Aufgabe der vorliegenden Erfindung besteht darin, eine polymerbeschichtete Oberflächenlage für eine Schichtpressstoffplatte (auch als HPL-Platte für "high-pressurelaminate" bezeichnet) bereit zu stellen, die hohe Kratzfestigkeit und eine ausgezeichnete Bewitterungsbeständigkeit aufweist, deren Glanzgrad sich während der Bewitterung nur geringfügig verändert, und die sich dennoch mit Hilfe eines einfachen Verfahrens ohne apparativ aufwändige ein- oder mehrstufige Strahlenhärtung aufbringen lässt. Darüber hinaus sollte die Oberfläche der Platte so beschaffen sein, dass sie chemikalienbeständig ist und leicht von Graffitis und anderen Verschmutzungen gereinigt werden kann.

Als Lösung dieser Aufgabe wird gemäß eines ersten Aspekts der Erfindung ein Verfahren bereit gestellt zur Herstellung einer Schichtpressstoffplatte mit einer Kernlage und einer polymerbeschichteten Oberflächenlage an mindestens einer Plattenoberfläche, wobei die Oberflächenlage als äußerste Schicht eine Polymerbeschichtung mit einem Polyurethan(meth)acrylat-Polymer aufweist und wobei das Verfahren die folgenden Schritte umfasst:
a) Auftragen eines Beschichtungssystems als Beschichtung auf ein Oberflächenmaterial für eine Schichtpressstoffplatte, wobei das Beschichtungssystem eine Harzkomponente, eine Härterkomponente sowie optionale Zusatzstoffe umfasst,
   wobei die Harzkomponente als Gemisch aus den Komponenten A bis D vorliegt, in dem
   Komponente A eine polymerisierbare (Meth)acrylatverbindung ist, die pro Molekül mindestens 2 Gruppen mit einer (meth)acrylischen Doppelbindung und keine Hydroxygruppen aufweist,
   Komponente B eine polymerisierbare (Meth)acrylatverbindung ist, die pro Molekül sowohl eine oder mehrere Gruppen mit einer (meth)acrylischen Doppelbindung als auch mindestens 2 Hydroxygruppen aufweist,
   Komponente C ein Polyurethan-Präpolymer ist, das pro Molekül mindestens 2 Hydroxygruppen und keine Isocyanatgruppen aufweist,
   Komponente D ein Harz mit einem Aminoplast-Grundgerüst ist, das pro Molekül mindestens 2 Hydroxygruppen aufweist;
   und wobei die Härterkomponente ein mindestens difunktionelles Isocyanat ist; und
b) Trocknen des in Schritt a) beschichteten Oberflächenmaterials bei einer erhöhten Temperatur, bei der eine Reaktion der Hydroxygruppen in der Harzkomponente mit den Isocyanatgruppen der Härterkomponente stattfindet, so dass sich in der Beschichtung ein Polyurethan-Polymer bildet, das Gruppen mit einer (meth)acrylischen Doppelbindung aufweist;
c) Bereitstellen eines Pressstapels, der ein Material zum Bilden einer Kernlage einer Schichtpressstoffplatte, das eine oder mehrere Lagen eines mit härtbarem Kunstharz imprägnierten Trägermaterials umfasst, und der das in Schritt b) erhaltene beschichtete Oberflächenmaterial als Oberflächenlage enthält, so dass zumindest auf einer Seite des Pressstapels das in Schritt b) erhaltene Oberflächenmaterial die äußerste Lage bildet und die getrocknete Beschichtung auf mindestens einer Oberfläche des Pressstapels vorliegt;
d) Verpressen des Pressstapels bei erhöhtem Druck und einer Temperatur oberhalb der Trocknungstemperatur des Schritts b), so dass eine Polymerisation der (meth)acrylischen Doppelbindungen in der getrockneten Beschichtung stattfindet und eine Schichtpressstoffplatte mit einer Kernlage und einer Oberflächenlage an mindestens einer Plattenoberfläche gebildet wird, die als äußerste Schicht eine Polymerbeschichtung mit einem Polyurethan(meth)acrylat-Polymer aufweist.

Überraschenderweise hat sich gezeigt, dass durch die Verwendung eines selbst wenig witterungsbeständigen Aminoplastharzes in Kombination mit den Komponenten A, B und C der Glanzgrad der Beschichtung im Lauf der Bewitterung einer nur geringen Änderung unterworfen ist. Die Erfinder haben darüber hinaus überraschenderweise festgestellt, dass insbesondere durch Verwendung der Komponente C eine deutliche Erhöhung der Kratzfestigkeit erreicht werden kann. Dies wird erfindungsgemäß ohne den Einsatz eines Harzes bzw. einer Harzkomponente erreicht, die einem aufwändigen Strahlenhärtungsverfahren unterzogen werden muss. Die Platten zeichnen sich darüber hinaus durch eine ausgezeichnete Chemikalienbeständigkeit aus und können leicht von Graffitis und anderen Verschmutzungen gereinigt werden.

Gemäß einem weiteren Aspekt der Erfindung wird daher eine Schichtpressstoffplatte mit einer Kernlage und einer polymerbeschichteten Oberflächenlage auf mindestens einer Plattenoberfläche bereit gestellt, die als äußerste Schicht eine Polymerbeschichtung mit einem Polyurethan(meth)acrylat-Polymer aufweist, und die erhältlich ist durch das zuvor im ersten Aspekt beschriebene, erfindungsgemäße Verfahren, wobei die polymerbeschichtete Oberflächenlage eine Kratzfestigkeit von ≥ 6N, gemessen nach EN 438-2.25, eine Änderung des Glanzgrades nach einer Bewitterung von 3500h nach dem Verfahren EN 438-2.29, gemessen nach EN ISO 2813 bei einem Winkel von 85°, von nicht mehr als 5 units aufweist, und chemikalienbeständig mit Grad ≥4, gemessen nach EN 438-2.26:2005 ist.

Einen weiteren Aspekt der Erfindung bildet ein Verfahren zur Herstellung eines polymerbeschichteten Oberflächenmaterials für eine Schichtpressstoffplatte, wie nachstehend im Detail beschrieben.

Das in Schritt a) des erfindungsgemäßen Verfahrens aufgetragene Beschichtungssystem umfasst eine Harzkomponente, eine Härterkomponente, sowie optionale Zusatzstoffe.

Die Harzkomponente ist ein Gemisch aus den Komponenten A, B, C, und D. Neben den Komponenten A bis D kann die Harzkomponente noch weitere Monomer- oder Polymerbestandteile und/oder Lösungsmittel enthalten. Vorzugsweise besteht die Harzkomponente aus den Komponenten A bis D und dem optionalen Lösungsmittel.

### Komponente A

Bei der Komponente A handelt es sich um eine polymerisierbare (Meth)acrylatverbindung, die pro Molekül mindestens 2 Gruppen mit einer (meth)acrylischen Doppelbindung und keine Hydroxygruppen aufweist. Die Komponente A kann von einem einzelnen Typ einer solchen polymerisierbaren (Meth)acrylatverbindung gebildet werden, oder sie kann mehrere unterschiedliche Typen solcher Verbindungen enthalten.

Wie dem Fachmann geläufig ist, wird der Ausdruck "(Meth)acryl" bzw. (Meth)acrylat" als Kurzschreibweise für Methacryl oder Acryl bzw. Methacrylat oder Acrylat verwendet. Daher umfasst der Begriff "(Meth)acrylatverbindung" als Sammelbezeichnung sowohl Verbindungen mit Acrylestergruppen CH₂=CH-C(O)-O- als Gruppen mit einer (meth)acrylischen Doppelbindung als auch Verbindungen mit Methacrylestergruppen CH₂=CCH₃-C(O)-O- als Gruppen mit einer (meth)acrylischen Doppelbindung. Bevorzugt sind die Gruppen mit einer (meth)acrylischen Doppelbindung der Verbindungen der Komponente A Acrylestergruppen.

Die Zahl der Gruppen mit einer (meth)acrylischen Doppelbindung, bevorzugt Acrylestergruppen, pro Molekül beträgt mindestens 2, bevorzugt 2 bis 18, besonders bevorzugt 2 bis 10, und insbesondere bevorzugt 4 bis 8.

Darüber hinaus enthalten die Verbindungen der Komponente A in Abgrenzung zu den Verbindungen der nachstehend definierten Komponente B keine Hydroxygruppen. Bevorzugt sind die Verbindungen der Komponente A darüber hinaus frei von -SH und -NH₂ Gruppen. Besonders bevorzugt als Verbindungen der Komponente A sind solche Verbindungen, die neben den mindestens 2 Gruppen mit einer (meth)acrylischen Doppelbindung keine weiteren reaktiven Gruppen aufweisen. Wie für den Fachmann leicht erkennbar ist, bezieht sich der Begriff der "reaktiven Gruppe" dabei auf mögliche Reaktionen zwischen Bestandteilen des Beschichtungssystems, d.h. in diesen besonders bevorzugten Verbindungen der Komponente A sind die mindestens 2 Gruppen mit einer (meth)acrylischen Doppelbindung, bevorzugt mindestens 2 Acrylestergruppen, die einzigen Gruppen, die dazu in der Lage sind, mit anderen Bestandteilen des Beschichtungssystems unter Ausbildung einer kovalenten Bindung zu reagieren. Wie für den Fachmann ebenfalls verständlich ist, gilt dies insbesondere unter den Bedingungen, denen das Beschichtungssystem im Lauf des erfindungsgemäßen Verfahrens ausgesetzt ist (d.h. insbesondere beim Auftragen in Schritt a), Trocknen in Schritt b), Bilden eines Pressstapels in Schritt c) und Verpressen des Pressstapels in Schritt d)).

Bevorzugt umfasst die Komponente A Verbindungen ausgewählt aus den Formeln (A1) und (A2), stärker bevorzugt ein Gemisch der Verbindungen der Formel (A1) und (A2). Besonders bevorzugt besteht die Komponente A aus Verbindungen der Formeln (A1) und (A2).

[H₂C=CH-C(O)-O-]ₘR¹-O-C(O)-NH-R²-NH-C(O)-O-R³[-O-C(O)-CH=CH₂]ₙ (A1);

worin R¹ und R³ unabhängig voneinander ausgewählt sind aus einer aliphatischen Kohlenwasserstoffgruppe, einer aliphatischen Polyethergruppe und einer aliphatischen Polyestergruppe, R² eine aliphatische oder cycloaliphatische Kohlenwasserstoffgruppe ist, n = 2-9, bevorzugt 2-4 und m = 2-9, bevorzugt 2-4 ist. Wie sich aus der Formel erkennen lässt, sind dabei m Acrylestergruppen H₂C=CH-C(O)-O- jeweils über eine Esterbindung an die Gruppe R¹ und n Acrylestergruppen an die Gruppe R³ gebunden.

Vorzugsweise sind R¹ und R³ unabhängig voneinander ausgewählt aus linearen oder verzweigten, bevorzugt verzweigten, Alkylgruppen, besonders bevorzugt aus Alkylgruppen mit 3 bis 10, stärker bevorzugt 3 bis 6 C-Atomen. R² ist vorzugsweise eine Alkylgruppe die offenkettig (d.h. linear oder verzweigt) oder cyclisch sein kann oder in der offenkettige oder verzweigte Einheiten kombiniert sein können, besonders bevorzugt eine Alkylgruppe mit 3 bis 20, stärker bevorzugt 6 bis 12 C-Atomen.

Soweit nicht anders angegeben, beschränken sich die Begriffe "Alkyl" oder "Alkylgruppe" im Rahmen dieser Beschreibung nicht auf einwertige gesättigte Kohlenwasserstoffgruppen, sondern können, wie aus dem jeweiligen Kontext ersichtlich, auch Gruppen mit einer höheren Anzahl an Valenzen umfassen. Wie sich z.B. aus Formel (A1) ergibt, stellt z.B. R¹ in seiner bevorzugten Form als Alkylrest in Formel (A1) m+1 Valenzen zur Anbindung an Nachbargruppen bereit. Dies gilt entsprechend auch für andere Bestandteile des Beschichtungssystems.

[H₂C=CH-C(O)-O-]ₒR⁴ (A2)

worin R⁴ eine aliphatische Kohlenwasserstoffgruppe ist, und o = 2-6, bevorzugt 3-5 ist. Vorzugsweise ist R⁴ eine lineare oder verzweigte, bevorzugt verzweigte, Alkylgruppe, besonders bevorzugt eine Alkylgruppe mit 3 bis 10, stärker bevorzugt 3 bis 6 C-Atomen.

### Komponente B

Bei der Komponente B handelt es sich um eine polymerisierbare (Meth)acrylatverbindung, die pro Molekül sowohl eine oder mehrere Gruppen mit einer (meth)acrylischen Doppelbindung als auch mindestens 2 Hydroxygruppen aufweist. Die Komponente B kann von einem einzelnen Typ einer solchen polymerisierbaren (Meth)acrylatverbindung gebildet werden, oder sie kann mehrere unterschiedliche Typen solcher Verbindungen enthalten.

Bevorzugt sind die Gruppen mit einer (meth)acrylischen Doppelbindung der Verbindungen der Komponente B Acrylestergruppen.

Die Zahl der Gruppen mit einer (meth)acrylischen Doppelbindung, bevorzugt Acrylestergruppen, pro Molekül beträgt mindestens 2, bevorzugt 2 bis 9, besonders bevorzugt 2 bis 4. Darüber hinaus enthalten die Verbindungen der Komponente B mindestens 2 Hydroxygruppen, bevorzugt 2 bis 5, besonders bevorzugt 2. Bei den Hydroxygruppen handelt es sich in der Regel um alkoholische Hydroxygruppen.

Bevorzugt umfasst Komponente B Verbindungen der Formel (B1), und besonders bevorzugt besteht sie aus Verbindungen der Formel (B1):

[H₂C=CH-C(O)-O-]ₚR⁵-O-C(O)-NH-R⁶-NH-C(O)-O-R⁷(OH)₂ (B1)

worin R⁵ ausgewählt ist aus einer aliphatischen Kohlenwasserstoffgruppe, einer alphatischen Polyethergruppe oder einer aliphatischen Polyestergruppe, R⁶ und R⁷ unabhängig voneinander ein aliphatischer oder cycloaliphatischer Kohlenwasserstoffrest sind und p = 2-9, bevorzugt 2-4 ist. Wie sich aus der Formel erkennen lässt, sind dabei p Acrylestergruppen H₂C=CH-C(O)-O- jeweils über eine Esterbindung an die Gruppe R⁵ und 2 Hydroxygruppen an die Gruppe R⁷ gebunden.

Vorzugsweise ist R⁵ eine lineare oder verzweigte, bevorzugt verzweigte, Alkylgruppe, besonders bevorzugt eine Alkylgruppe mit 3 bis 10, stärker bevorzugt 3 bis 6 C-Atomen. R⁶ ist vorzugsweise eine Alkylgruppe die offenkettig (d.h. linear oder verzweigt) oder cyclisch sein kann oder in der offenkettige oder verzweigte Einheiten kombiniert sein können, besonders bevorzugt eine Alkylgruppe mit 3 bis 20, stärker bevorzugt 6 bis 12 C-Atomen. R⁷ ist vorzugsweise eine Alkylgruppe die offenkettig (d.h. linear oder verzweigt) oder cyclisch sein kann oder in der offenkettige oder verzweigte Einheiten kombiniert sein können, besonders bevorzugt eine lineare oder verzweigte Alkylgruppe mit 3 bis 20, stärker bevorzugt 3 bis 10 C-Atomen.

### Komponente C

Die Komponente C ist ein Polyurethan-Präpolymer, das pro Molekül mindestens 2 Hydroxygruppen und keine Isocyanatgruppen aufweist. Wie für den Fachmann ersichtlich, handelt es sich bei den Hydroxygruppen generell um alkoholische Hydroxygruppen Das Polyurethan-Präpolymer kann linear order verzweigt sein. Es wird vorzugsweise gebildet aus einem Polyisocyanat mit 2 bis 4, bevorzugt 2 Isocyanatgruppen und einem Polyalkohol mit 2 bis 4, vorzugsweise 2 oder 3 alkoholischen Hydroxygruppen. Bei dem Polyisocyanat und dem Polyalkohol handelt es sich bevorzugt um aliphatische Verbindungen. Die Anzahl der Untereinheiten im Polyurethan-Präpolymer, die aus dem Polyisocyanat gebildet werden, und die Anzahl der Untereinheiten, die aus dem Polyalkohol gebildet werden, beträgt vorzugsweise jeweils 2 bis 20, bevorzugt 2 bis 9. Die Anzahl der Hydroxygruppen pro Molekül des Polyurethan-Präpolymers beträgt bevorzugt 2 bis 9, besonders bevorzugt 2 bis 5.

Das Polyurethan-Präpolymer der Komponente C enthält keine Isocyanatgruppen. Bevorzugt als Komponente C sind solche Polyurethan-Präpolymere, die neben den mindestens 2 Hydroxygruppen keine weiteren reaktiven Gruppen aufweisen. Wie für den Fachmann leicht erkennbar ist, bezieht sich der Begriff der "reaktiven Gruppe" dabei auf mögliche Reaktionen zwischen Bestandteilen des Beschichtungssystems, d.h. in diesen bevorzugten Polyurethan-Präpolymeren der Komponente C sind die mindestens 2 Hydroxygruppen die einzigen Gruppen, die dazu in der Lage sind, mit anderen Bestandteilen des Beschichtungssystems unter Ausbildung einer kovalenten Bindung zu reagieren. Wie für den Fachmann ebenfalls verständlich ist, gilt dies insbesondere unter den Bedingungen, denen das Beschichtungssystem im Lauf des erfindungsgemäßen Verfahrens ausgesetzt ist (d.h. insbesondere. beim Auftragen in Schritt a), Trocknen in Schritt b), Bilden eines Pressstapels in Schritt c) und Verpressen des Pressstapels in Schritt d)).

Bevorzugt umfasst die Komponente C Polyurethan-Präpolymere ausgewählt aus den Formeln (C1) und (C2), d.h. die Komponente C umfasst eine Verbindung der Formel (C1) und/oder eine Verbindung der Formel (C2). Besonders bevorzugt besteht die Komponente C aus Polyurethan-Präpolymeren ausgewählt aus den Verbindungen der Formeln (C1) und (C2). Kombinationen aus Verbindungen (C1) und (C2) sind bevorzugt. 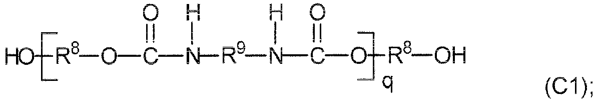 worin R⁸ unabhängig voneinander bei jedem Auftreten ausgewählt ist aus einer aliphatischen Kohlenwasserstoffgruppe, die mit einer oder mehreren Hydroxylgruppen substituiert sein kann, einer aliphatischen Polyethergruppe und einer aliphatischen Polyestergruppe, R⁹ unabhängig voneinander bei jedem Auftreten eine aliphatische oder cycloaliphatische Kohlenwasserstoffgruppe ist, und q 2-9 ist.

Es ist bevorzugt, dass alle Gruppen R⁸ gleich sind und alle Gruppen R⁹ gleich sind.

Vorzugsweise ist R⁸ eine lineare oder verzweigte, bevorzugt verzweigte, Alkylgruppe, besonders bevorzugt eine Alkylgruppe mit 3 bis 10, stärker bevorzugt 3 bis 6 C-Atomen. Auch die Alkylgruppe R⁸ kann mit einer oder mehreren Hydroxylgruppen substituiert sein Bevorzugt liegen 0, 1 oder 2 solcher Hydroxysubstituenten vor. R⁹ ist vorzugsweise eine Alkylgruppe die offenkettig (d.h. linear oder verzweigt) oder cyclisch sein kann oder in der offenkettige oder verzweigte Einheiten kombiniert sein können, besonders bevorzugt eine Alkylgruppe mit 3 bis 20, stärker bevorzugt 6 bis 12 C-Atomen. 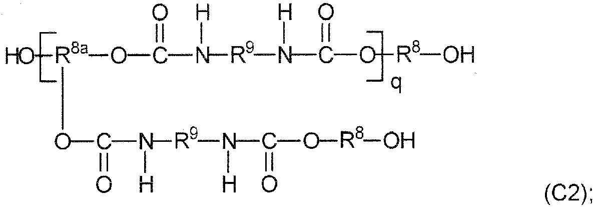 worin R⁸ und R^{8a} unabhängig voneinander bei jedem Auftreten ausgewählt sind aus einer aliphatischen Kohlenwasserstoffgruppe, die mit einer oder mehreren OH-Gruppen substituiert sein kann, einer aliphatischen Polyethergruppe und einer aliphatischen Polyestergruppe, R⁹ unabhängig voneinander bei jedem Auftreten eine aliphatische oder cycloaliphatische Kohlenwasserstoffgruppe ist, und q 2-9 ist.

Für Formel (C2) ist bevorzugt, dass alle Gruppen R⁸ und R^{8a} gleich sind und alle Gruppen R⁹ gleich sind.

Vorzugsweise ist R⁸ und R^{8a} jeweils eine lineare oder verzweigte, bevorzugt verzweigte, Alkylgruppe, besonders bevorzugt eine Alkylgruppe mit 3 bis 10, stärker bevorzugt 3 bis 6 C-Atomen. Auch die Alkylgruppen R⁸ und R^{8a} können mit einer oder mehreren Hydroxylgruppen substituiert sein. Bevorzugt liegen in R⁸ 1 oder 2 Hydroxysubstituenten vor, und in in R^{8a} 0 oder 1 Hydroxysubstituent. R⁹ ist vorzugsweise eine Alkylgruppe die offenkettig (d.h. linear oder verzweigt) oder cyclisch sein kann oder in der offenkettige oder verzweigte Einheiten kombiniert sein können, besonders bevorzugt eine Alkylgruppe mit 3 bis 20, stärker bevorzugt 6 bis 12 C-Atomen.

### Komponente D

Bei der Komponente D handelt es sich um ein Harz mit einem Aminoplast-Grundgerüst das pro Molekül mindestens 2 Hydroxygruppen aufweist. Wie für den Fachmann ersichtlich, handelt es sich bei den Hydroxygruppen generell um alkoholische Hydroxygruppen. Das Grundgerüst des Harzes der Komponente D kann auch Gruppen tragen, die durch Reaktion von Hydroxygruppen gebildet sind, z.B. Estergruppen oder Urethangruppen. Bevorzugt liegen pro Molekül 2 bis 30, stärker bevorzugt 10 bis 30 Hydroxygruppen vor.

Bei dem Harz mit einem Aminoplast-Grundgerüst handelt es sich bevorzugt um ein ausgehärtetes Harz in Form eines Pulvers. Das mittlere Molekulargewicht (Mn) des Harzes der Komponente D liegt bevorzugt zwischen 1000 g/mol und 1.000.000 g/mol.

Das Harz mit einem Aminoplast-Grundgerüst ist vorzugsweise ein Harz mit einem Harnstoff-Formaldehyd-Harz-Grundgerüst, das durch Polymerisation (insbesondere Polykondensation) von Formaldehyd und Harnstoff erhältlich ist, stärker bevorzugt ein ausgehärtetes Harz in Form eines Pulvers mit einem Harnstoff-Formaldehyd-Harz-Grundgerüst.

Die Harzkomponente der Beschichtungszusammensetzung liegt als Gemisch der Komponenten A, B, C und D, gegebenenfalls in einem Lösungsmittel, vor.

Als beispielhafte Lösungsmittel können die folgenden genannt werden: Ester wie Ethylacetat, Butylacetat, 2-Butoxyethylacetat, aliphatische, cycloaliphatische und aromatische Kohlenwasserstoffe, Alkohole. Glycole, Glycolether oder Ketone.

Die Konzentration der Komponenten A bis D im Lösungsmittel kann beispielsweise 65 Gew.% bis 95 Gew.%, bezogen auf das Gesamtgewicht der Lösung, betragen

Zur Herstellung der Harzkomponente des Beschichtungssystems können die Komponenten A bis D bereitgestellt und vermischt werden. Alternativ können z.B. insbesondere zur Bereitstellung der Komponenten A (wie z.B. die Verbindung der Formel (A1), B und C auch Ausgangsprodukte wie Polyole, Polyisocyanate, und/oder gemischt-funktionelle Verbindungen, wie ein Polyacrylat mit einer oder mehreren Hydroxylgruppen gemischt werden, aus denen die Komponenten A, B und C im Rahmen einer Synthese der Harzkomponente hergestellt werden. Beispielsweise kann die Harzkomponente durch eine ein- oder mehrstufige Synthese bei Temperaturen von 30 bis 130°C hergestellt werden. Vorzugsweise ist bei der Synthese der Harzkomponente das Harz mit Aminoplast-Grundgerüst als Komponente D von Beginn der Synthese an eingemischt.

Vorzugsweise wird bei der Herstellung der Harzkomponente nach Zugabe des Harzes mit Aminoplastgrundgerüst D thermisch auf eine Temperatur von 30 bis 130°C erhitzt.

In der Harzkomponente liegt die Komponente A bevorzugt in einer Menge von 40,0 bis 80,0 Gew.%, die Komponente B in einer Menge von 19,0 bis 55,0 Gew.%, die Komponente C in einer Menge von 0,5 bis 5,0 Gew.% und die Komponente D in einer Menge von 0,5 bis 7,0 Gew.%, bezogen auf das Gesamtgewicht der Komponenten A bis D als 100 Gew.%. In einer stärker bevorzugten Ausführungsform enthält die Harzkomponente die Komponente der Formel (A1) in einer Menge von 15,0 bis 45,0 Gew.%, die Komponente der Formel (A2) in einer Menge von 15,0 bis 45,0 Gew.% (wobei die Gesamtmenge von (A1) und (A2) 40,0 bis 80,0 Gew.% beträgt), die Komponente der Formel (B1) in einer Menge von 19,0 bis 55,0 Gew.%, die Komponenten (C1) und (C2) in einer Gesamtmenge von 0,5 bis 5,0 Gew.% und die Komponente D in einer Menge von 0,5 bis 7,0 Gew.%. Die Summe der Komponenten beträgt dabei wiederum 100 Gew.%.

In einer noch stärker bevorzugten Ausführungsform enthält die Harzkomponente die Komponente der Formel (A1) in einer Menge von 20,0 bis 40,0 Gew.%, die Komponente der Formel (A2) in einer Menge von 20,0 bis 40,0 Gew.% (wobei die Gesamtmenge von (A1) und (A2) 40,0 bis 80,0 Gew.% beträgt), die Komponente der Formel (B1) in einer Menge von 25,0 bis 47,0 Gew.%, die Komponenten (C1) und (C2) in einer Gesamtmenge von 0,6 bis 3,0 Gew.% und die Komponente D in einer Menge von 1,0 bis 5,0 Gew.%. Die Summe der Komponenten beträgt dabei wiederum 100 Gew.% .

In einer besonders stark bevorzugten Ausführungsform enthält die Harzkomponente die Komponente der Formel (A1) in einer Menge von 25,0 bis 35,0 Gew.%, die Komponente der Formel (A2) in einer Menge von 25,0 bis 35,0 Gew.% (wobei die Gesamtmenge von (A1) und (A2) 50,0 bis 70,0 Gew.% beträgt), die Komponente der Formel (B1) in einer Menge von 30,0 bis 42,0 Gew.%, die Komponenten (C1) und (C2) in einer Gesamtmenge von 0,8 bis 2,0 Gew.% und die Komponente D in einer Menge von 2,0 bis 4,5 Gew.%. Die Summe der Komponenten beträgt dabei wiederum 100 Gew.%.

Die Komponente D wird bevorzugt in einer Menge in der Beschichtungszusammensetzung eingesetzt, dass der Gehalt an N (Stickstoff) aus -N-CO-N- Gruppen in der mit Hilfe der Beschichtungszusammensetzung erhaltenen Polymerbeschichtung des Oberflächenmaterials bzw. der Oberflächenlage zwischen 1 und 30 Gew.%, bevorzugt zwischen 3 und 25 Gew.%, stärker bevorzugt zwischen 5 und 20 Gew.%, bezogen auf den gesamten N-Gehalt der Polymerbeschichtung, liegt. Er kann mittels dem Fachmann bekannten oberflächensensitiven, strukturanalytischen Verfahren zur Konstitutionsaufklärung bestimmt werden. Ein bevorzugtes Beispiel für ein solches Verfahren ist ein Verfahren zur Bestimmung mittels XPS Spektroskopie nach EN ISO 10993-18:2009.

Neben der Harzkomponente enthält das Beschichtungssystem eine Härterkomponente, bei der es sich um ein mindestens difunktionelles Isocyanat handelt. Bevorzugt enthält das Isocyanat des Härters 2 bis 4 Isocyanatgruppen. Die Isocyanatgruppen können optional in ihrer Reaktivität bei Raumtemperatur blockiert sein.

Bevorzugte Beispiele für die Härterkomponente sind die folgenden (i) bis (iii):
(i) Ein Isocyanat der Formel R¹¹[-N=C=O]_{S} zum Einsatz kommen, wobei s 2 bis 4, bevorzugt 2 oder 3 ist, und R¹¹ eine aliphatische oder cycloaliphatische Kohlenwasserstoffgruppe ist, bevorzugt ein eine Alkylgruppe, die offenkettig (d.h. linear oder verzweigt) oder cyclisch sein kann, oder in der offenkettige oder verzweigte Einheiten kombiniert sein können, besonders bevorzugt eine Alkylgruppe mit 3 bis 20, stärker bevorzugt 3 bis 12 C-Atomen.
(ii) Ein Oligomer, z.B. ein Trimer, aus Isocyanaten der unter (i) angegebenen Formel. Ein bevorzugtes Beispiel für ein solches Oligomer ist das Trimer des Hexamethylendiisocyanats.
(iii) Ein Derivat der unter (i) oder (ii) genannten Isocyanate, bei dem die Isocyanatgruppen in ihrer Reaktivität bei Raumtemperatur blockiert sind.

Bevorzugt wird die Härterkomponente in einer Menge eingesetzt, bei der ein Überschuss der Isocyanatgruppen in der Härterkomponente gegenüber den Hydroxygruppen in der Harzkomponente vorliegt.

Das Mengenverhältnis zwischen Harzkomponente und Härterkomponente im Beschichtungssystem (als Verhältnis der Gewichtsteile der Komponenten A+B+C+D zu Gewichtsteilen Härterkomponente) liegt vorzugsweise im Bereich von 100/20 bis 100/40, besonders bevorzugt 100/25 bis 100/31.

Zum Bereitstellen des Beschichtungssystems werden die Harzkomponente und die Härterkomponente, ggf. zusammen mit den optionalen Zusatzstoffen, vermischt. nach Vermischen der beiden Komponenten liegt die Gebrauchsdauer des Beschichtungssystems typischerweise im Bereich von einer bis mehreren Stunden, z.B. zwischen 1 und 3 Stunden.

Optionale Zusatzstoffe, die dem Beschichtungssystem zugegeben werden können, sind dem Fachmann bekannt. Beispiele, die einzeln oder als Kombination verwendet werden können, sind Inhibitoren zur Verhinderung einer frühzeitigen Polymerisation der (meth)acrylischen Doppelbindungen, Katalysatoren, Polymerisationsstarter, Lichtschutzmittel, Füllstoffe, Farbstoffe, Pigmente, Additive zur Beeinflussung des Glanzgrades, Lösungsvermittler, Flammschutzmittel, UV-Absorber und Additive zur Verbesserung der Leitfähigkeit.

Vorzugsweise enthält das Beschichtungssystem als Zusatzstoffe einen oder mehrere Polymerisationsstarter, d.h. eine Verbindung, die bei Erhitzen, z.B. bei Erhitzen auf Temperaturen von 130 °C oder mehr, Radikale bildet. Ein Beispiel für einen geeigneten Polymerisationsstarter ist tert. Butylperbenzoat.

Die Menge der Zusatzstoffe kann von Fachmann geeignet gewählt werden. Bevorzugt besteht das Beschichtungssystem aus der Harzkomponente und der Härterkomponente in einer Menge von insgesamt mindesten 90 Gew.%, und den optionalen Zusatzstoffen in einer Menge von höchstens 10 Gew.%, bezogen auf das Gesamtgewicht der Beschichtungszusammensetzung als 100 Gew.%. Die Mengenangaben beziehen sich dabei jeweils auf den Feststoffgehalt, d.h. gegebenenfalls vorhandene Lösungsmittel werden nicht einbezogen.

Die Beschichtungszusammensetzung ist typischerweise bei 25°C und Normaldruck flüssig und weist beispielsweise eine Viskosität von 500 bis 3000 mPas auf.

Gemäß dem erfindungsgemäßen Verfahren wird das Beschichtungssystem als Beschichtung auf ein Oberflächenmaterial für eine Schichtpressstoffplatte aufgetragen. Solche Oberflächenmaterialien für Schichtpressstoffplatten sind den Fachmann geläufig. Es handelt sich dabei generell um ein flächiges Material, d.h. ein Material, dessen Länge und Breite erheblich größer sind als seine Dicke, wie eine Folie, eine Materialbahn oder ein Bogen eines Materials.

Beispiele für geeignete Oberflächenmaterialien sind Vliese, Non-wovens oder Gewebe aus natürlichen oder synthetischen organischen oder anorganischen Fasern, insbesondere in Form von Bahnen solcher Materialien, Bahnen oder Folien aus Kunststoffen (Thermoplaste, Duroplaste, oder Elastomere), Metall, Holz, Stein, Glas, oder Verbundmaterialien. Ein bevorzugtes Beispiel für ein Oberflächenmaterial ist Papier, z.B. in Form einer Papierbahn.

Besonders bevorzugt als Oberflächenmaterial ist eine mit einem härtbaren Kunstharz imprägnierte Papierbahn. Als härtbares Kunstharz können hier Kunstharze zum Einsatz kommen, die für die Anwendung in Schichtpressstoffplatten bekannt sind, wie Phenol-Formaldehyd-Harz (PF-Harz), Melamin-Formaldehydharz (MF-Harz), Harnstoff-Formaldehyd-Harz (UF-Harz) oder Mischharze daraus, Epoxidharze, Polyesterharze, Thermoplaste oder Elastomere. Bevorzugt werden als härtbare Kunstharze Phenol-Formaldehyd-Harz (PF-Harz), Melamin-Formaldehydharz (MF-Harz), Harnstoff-Formaldehyd-Harz (UF-Harz) oder Mischharze daraus eingesetzt.

Bei dem in Schritt a) beschichteten Oberflächenmaterial handelt es sich weiter bevorzugt um eine Dekorschicht für eine Schichtpressstoffplatte, die z.B. Farbstoffe oder Pigmente aufweisen kann, besonders bevorzugt um ein mit härtbarem Kunstharz imprägniertes Dekorpapier.

Das Auftragen des Beschichtungssystems als Beschichtung auf das Oberflächenmaterial kann mit bekannten Verfahren, z.B. mit Hilfe von Walzen, erfolgen. Die Beschichtung wird vorzugsweise so aufgetragen, dass ein geschlossener Film der Beschichtungszusammensetzung auf dem Oberflächenmaterial gebildet wird. Die aufgetragene Menge liegt vorzugsweise im Bereich von 20 bis 150 g/m^{2,} besonders bevorzugt im Bereich von 50 bis 100 g/m².

Nach dem Auftragen des Beschichtungssystems erfolgt in einem nächsten Schritt das Trocknen des beschichteten Oberflächenmaterials. Wie für den Fachmann ersichtlich, bezieht sich der Begriff des Trocknens in diesem Zusammenhang auf den Übergang des Beschichtungssystems von einem flüssigen Zustand in einen Zustand, in dem es bei Handhabung des Oberflächenmaterials nicht mehr fließfähig ist. Allfällig vorhandenes Lösemittel wird bei diesem Schritt ganz oder teilweise entfernt.

Das Trocknen erfolgt bei einer erhöhten Temperatur, bei der eine Reaktion der Hydroxygruppen in der Harzkomponente mit den Isocyanatgruppen der Härterkomponente im Beschichtungssystem stattfindet, so dass sich in der Beschichtung ein Polyurethan-Polymer bildet, das Gruppen mit einer (meth)acrylischen Doppelbindung aufweist. Komponenten des Beschichtungssystems, die keine funktionellen Gruppen aufweisen, welche mit der Härterkomponente reagieren können, sind nicht an der Trocknungsreaktion beteiligt. Typischerweise wird das Trocknen bei einer Temperatur von 130 °C oder weniger, bevorzugt in einem Temperaturbereich von 100 bis 130 °C durchgeführt. Bei diesen Temperaturen ist gewährleistet, dass die Reaktion mit der Härterkomponente mit ausreichender Geschwindigkeit abläuft, während die (meth)acrylischen Doppelbindungen noch nicht polymerisiert werden. Unterstützend kann dem Beschichtungssystem ein Inhibitor zugegeben werden, der die Polymerisation der (meth)acrylischen Doppelbindungen während dem Schritt des Trocknens verhindert.

Vorteilhafterweise weist das Oberflächenmaterial nach dem Schritt des Trocknens eine Beschichtung auf, welche grifffest und blockfrei ist. Ein derart beschichtetes Oberflächenmaterial kann problemlos, z.B. ohne unerwünschtes Einrollen, mit anderen Schichten zu einem Pressstapel verschlichtet werden.

Nach dem Trocknen des Oberflächenmaterials wird ein Pressstapel bereit gestellt, der ein Material zum Bilden einer Kernlage einer Schichtpressstoffplatte und das beschichtete Oberflächenmaterial als Oberflächenlage enthält. Zumindest auf einer Seite des Pressstapels, optional auf beiden Seiten, bildet das getrocknete, beschichtete Oberflächenmaterial die äußerste Lage des Pressstapels, und die getrocknete Beschichtung liegt auf mindestens einer Oberfläche, optional auf beiden Oberflächen, des Pressstapels vor.

Das Material zum Bilden einer Kernlage einer Schichtpressstoffplatte umfasst eine oder mehrere, bevorzugt mehrere Lagen eines mit härtbarem Kunstharz imprägnierten Trägermaterials. Geeignete Trägermaterialien sind dem Fachmann geläufig. Es handelt sich dabei generell um ein flächiges Trägermaterial, d.h. ein Material, dessen Länge und Breite erheblich größer sind als seine Dicke, wie eine Folie, eine Materialbahn oder ein Bogen eines Materials. Die Lagen können aus dem gleichen Material oder aus zwei oder mehr unterschiedlichen Materialien bestehen.

Beispiele für geeignete Trägermaterialien sind Vliese, Non-wovens oder Gewebe aus natürlichen oder synthetischen organischen oder anorganischen Fasern, insbesondere in Form von Bahnen solcher Materialien. Ein bevorzugtes Beispiel für ein Trägermaterial ist Papier, z.B. in Form einer Papierbahn.

Als härtbares Kunstharz, mit dem die Lagen des Trägermaterials imprägniert sind, können Kunstharze zum Einsatz kommen, die für die Anwendung in Schichtpressstoffplatten bekannt sind, wie Phenol-Formaldehyd-Harz (PF-Harz), Melamin-Formaldehydharz (MF-Harz), Harnstoff-Formaldehyd-Harz (UF-Harz) oder Mischharze daraus, Epoxidharze, Polyesterharze, Thermoplaste oder Elastomere. Bevorzugt werden als hartbare Kunstharze Phenol-Formaldehyd-Harz (PF-Harz), Melamin-Formaldehydharz (MF-Harz), Harnstoff-Formaldehyd-Harz (UF-Harz) oder Mischharze daraus eingesetzt.

Das Material zum Bilden einer Kernlage einer Schichtpressstoffplatte umfasst eine oder mehrere, bevorzugt mehrere Lagen des mit härtbarem Kunstharz imprägnierten Trägermaterials. Bevorzugt liegt die Zahl der Lagen im Bereich von 1 bis 200, insbesondere 2 bis 120.

Nach dem Bereitstellen des Pressstapels wird der Stapel bei erhöhtem Druck und einer Temperatur oberhalb der Trocknungstemperatur verpresst, bei der das beschichtete Oberflächenmaterial getrocknet wurde. Die Temperatur ist ausreichend hoch gewählt, dass eine Polymerisation der (meth)acrylischen Doppelbindungen in der getrockneten Beschichtung stattfindet.

Der beim Verpressen angewandte Druck liegt in der Regel im Bereich von 50 bis 90 kPa. Die Temperatur liegt in der Regel oberhalb von 130 °C, bevorzugt im Bereich von 135 bis 150 °C. Das Verpressen erfolgt in der Regel über einen Zeitraum von 10 bis 100 Minuten.

Wenn gewünscht kann das Verpressen in einer Heißpresse durchgeführt werden, die mit einer strukturgebenden Oberfläche versehen ist und die der Schichtpressstoffplatte eine Oberflächenstruktur verleiht.

Erfindungsgemäß wird eine Schichtpressstoffplatte mit einer Kernlage und einer Oberflächenlage an mindestens einer Plattenoberfläche gebildet, die als äußerste Schicht eine Polymerbeschichtung mit einem Polyurethan(meth)acrylat-Polymer aufweist, d.h. das Polymer umfasst sowohl polymerisierte Einheiten, die mit Hilfe von Urethanbindungen verbunden sind, als auch polymerisierte Einheiten, die mit Hilfe der Polymerisationsreaktion der (meth)acrylischen Doppelbindungen über Kohlenstoff-Kohlenstoff-Bindungen verbunden sind. Darüber hinaus enthält das Polymer durch die Verwendung des Harzes mit funktionellen Gruppen der Komponente D im Beschichtungssystem auch Untereinheiten, die durch ein Harz mit einem Aminoplast-Grundgerüst gebildet werden. Vorzugsweise besteht die Polymerbeschichtung aus dem Polyurethan(meth)acrylat-Polymer, das wie vorstehend beschrieben aus der Harzkomponente, der Härterkomponente sowie den optionalen Zusatzstoffen gebildet wurde.

Das nach dem Beschichten und dem Trocknen erhaltene polymerbeschichtete Oberflächenmaterial kann bequem transportiert, gelagert und weiterverarbeitet werden, und stellt daher ein wertvolles Zwischenprodukt bei der Herstellung von Schichtpressstoffplatten dar. Daher stellt ein Verfahren zur Herstellung des polymerbeschichteten Oberflächenmaterial einen weiteren Aspekt der vorliegenden Erfindung dar, bei dem wie vorstehend beschrieben das Beschichtungssystem als Beschichtung auf das Oberflächenmaterial für eine Schichtpressstoffplatte aufgetragen wird, das beschichtete Oberflächenmaterials bei einer erhöhten Temperatur getrocknet wird, bei der eine Reaktion der Hydroxygruppen in der Harzkomponente mit den Isocyanatgruppen der Härterkomponente stattfindet, so dass sich in der Beschichtung ein Polyurethan-Polymer bildet, das Gruppen mit einer (meth)acrylischen Doppelbindung aufweist, und gegebenenfalls zusätzlich nach dem Trocknen die (meth)acrylischen Doppelbindungen in der Beschichtung bei einer Temperatur polymerisiert werden, die oberhalb der Trocknungstemperatur liegt, so dass sich in der Beschichtung ein Polyurethan(meth)acrylatPolymer bildet. Für das Beschichtungssystem, das Oberflächenmaterial, die Bedingungen für das Trocknen und die Temperatur bei der optionale Polymerisation der methacrylischen Doppelbindungen gelten die gleichen Angaben, wie sie zum erfindungsgemäßen Verfahren zur Herstellung der Schichtpressstoffplatte gemacht wurden.

Erfindungsgemäß werden so Schichtpressstoffplatten mit einer Kernlage und einer polymerbeschichteten Oberflächenlage an mindestens einer Plattenoberfläche bereit gestellt, die als äußerste Schicht eine Polymerbeschichtung mit einem Polyurethan(meth)acrylatPolymer aufweist. Das Polyurethan(meth)acrylat-Polymer weist Untereinheiten auf, die durch ein Harz mit einem Aminoplast-Grundgerüst gebildet werden. Die polymerbeschichtete Oberflächenlage verleiht hohe Kratzfestigkeit, und ihr Glanzgrad verändert sich während der Bewitterung nur geringfügig. Darüber hinaus ist die Oberfläche der Platte chemikalienbeständig mit Grad ≥4, d.h. insbesondere 4 oder 5, gemessen nach EN 438-2.26:2005, und kann daher leicht von Graffitis und anderen Verschmutzungen gereinigt werden. Insbesondere weist die polymerbeschichtete Oberflächenlage eine Kratzfestigkeit von ≥ 6N, gemessen nach EN 438-2.25:2005, und eine Änderung des Glanzgrades nach einer Bewitterung von 3500h nach dem Verfahren EN 438-2.29:2005, gemessen nach EN ISO 2813 bei einem Winkel von 85°, von nicht mehr als 5 units, vorzugsweise nicht mehr als 3, auf. Bevorzugt beträgt die Änderung des Glanzgrades, gemessen unter den gleichen Bedingungen, nicht mehr als 20% gegenüber dem Ausgangswert vor Bewitterung als 100%.

Bevorzugt liegt der Gehalt an nach der Polymerisation der (meth)acrylischen Doppelbindungen verbleibenden -C=C- Gruppen in der Polymerbeschichtung der Oberflächenlage, bestimmt mittels IR Spektroskopie, zwischen 0,01 und 5 Gew.%, stärker bevorzugt zwischen 0,08 und 2,5 Gew.%, bezogen auf das Gesamtgewicht der Polymerbeschichtung.

Bevorzugt liegt der der Gehalt an N aus -N-CO-N- Gruppen in der Polymerbeschichtung der Oberflächenlage, zwischen 1 und 30 Gew.%, stärker bevorzugt zwischen 3 und 25 Gew.%, und noch stärker bevorzugt zwischen 5 und 20 Gew.%, bezogen auf den gesamten N-Gehalt der Polymerbeschichtung. Er kann mittels dem Fachmann bekannten oberflächensensitiven, strukturanalytischen Verfahren zur Konstitutionsaufklärung bestimmt werden. Ein bevorzugtes Beispiel für ein solches Verfahren ist ein Verfahren zur Bestimmung mittels XPS Spektroskopie nach EN ISO 10993-18:2009.

### Beispiele

### Beispiel 1:

Zur Herstellung eines Beschichtungssystems werden in einem Reaktionsgefäß 100 Gewichtsteile einer Mischung der folgenden Komponenten in n-Butylacetat bei einem Gesamtfeststoffgehalt von 70%:
32 Gewichtsteile

   [H₂C=CH-C(O)-O-]ₘR¹-O-C(O)-NH-R ²-NH-C(O)-O-R³[-O-C(O)-CH=CH₂]ₙ (A1)

   worin

   R¹ = (-CH₂)₃C-CH₂-

   R² = 3,3,5,5-Tetramethylcyclohexandiyl

   R³ = -CH₂-C(CH₂-)₃

   und n = 3 und m = 3 ist;
32,6 Gewichtsteile

   [H₂C=CH-C(O)-O-]ₒR⁴ (A2)

   worin R⁴= C(CH₂-)₄ und o = 4 ist;
30,1 Gewichtsteile

   [H₂C=CH-C(O)-O-]ₚR⁵-O-C(O)-NH-R⁶-NH-C(O)-O-R⁷(OH)₂ (B1)

   worin

   R⁵ = (-CH₂)₃C-CH₂-

   R⁶ = 3,3,5,5-Tetramethylcyclohexandiyl

   R⁷ = -CH₂- C(C₂-)₂-CH₃

   und p = 3 ist;
1,9 Gewichtsteile 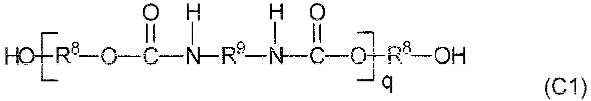 worin

   R⁸ = -CH₂-C(CH₂-CH₃)(CH₂-OH)-(CH₂)-

   R⁹ = 3,3,5,5-Tetramethylcyclohexandiyl

   und q = 3 ist; und 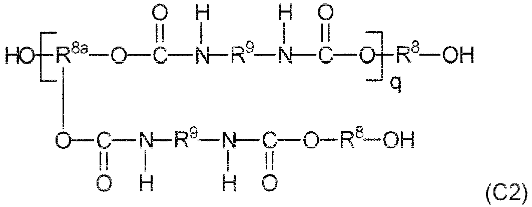 worin

   R⁸ = -CH₂-C(CH₂-CH₃)(CH₂-OH)-(CH₂)-

   R^{8a}= -CH₂-C(CH₂-CH₃)(CH₂-)-(CH₂)-

   R⁹ = 3,3,5,5-Tetramethylcyclohexandiyl

   und q = 3 ist; und
3,4 Gewichtsteile
   D: ausgehärtetes Harnstoff-Formaldehyd-Harz mit einem Molekulargewicht Mn von > 1000 g/mol]
   mit 28 Gew.-Teilen einer Härterkomponente in Form eines trimerisierten Hexamethylendiisocyanats mit einem Isocyanat-Äquivalentgewicht von 195 gemischt und mit 0,1 Gewichtsteilen tert. Butylperbenzoat als Radikalbildner versetzt. Die Halbwertszeit von tert. Butylperbenzoat beträgt bei 140°C ca. 10 Minuten. Diesem Beschichtungssystem können ferner die für Beschichtungssysteme bekannten Zusatzstoffe wie Verlaufmittel, Entschäumer, Lichtschutzmittel, Entgasungsmittel zugegeben werden. Die Gebrauchsdauer des Beschichtungssystems liegt bei 1 - 1,5 Stunden.

Das Beschichtungssystem wird in einer Beschichtungsanlage mittels Auftragswalzen auf eine mit härtbaren Harzen imprägnierte Papierbahn als Oberflächenmaterial für eine Schichtpressstoffplatte aufgebracht. Das Beschichtungssystem wird in einer Dicke von 80+/- 3 g/m² aufgetragen. Anschließend erfolgt im Trockner einer Beschichtungsanlage bei einer Temperatur von 125°C, eine teilweise Vernetzungsreaktion zwischen der Isocyanatgruppe aus der Härterkomponente und den freien Hydroxylgruppen der Harzkomponente unter Ausbildung eines (meth)acrylische Doppelbindungen enthaltenden Harzkomponente. Die Durchlaufgeschwindigkeit im Trockner wird derart gewählt, dass das beschichtete Trägermaterial als grifffester Film vorliegt, welcher beliebig lange lagerfähig ist.

Für die Herstellung von Schichtpressstoffplatten mit Polyurethanacrylatoberfläche wird das beschichtete Oberflächenmaterial mit den übrigen Komponenten des Schichtpaketes wie folgt verschlichtet (aufgebaut):
beschichtetes Oberflächenmaterial (Dekorschicht) / Kernschicht bestehend aus etwa 12 mit Phenolharz imprägnierten Papierbahnen / Beschichtetes Oberflächenmaterial (Dekorschicht). Die Polymerbeschichtung des Oberflächenmaterials liegt jeweils als äußerste Schicht des Pressstapels vor.

Dieser Pressstapel wird mit einem Druck von 80 bar und einer Temperatur von 140°C 20 min. lang verpresst. Bei diesen Reaktionstemperaturen erfolgt die weitere, durch die im Beschichtungssystem vorliegenden Radikalbildner ausgelöste Vernetzungsreaktion der reaktiven (meth)acrylischen Doppelbindungen unter Ausbildung eines ausgehärteten Polyurethanacrylates. Gleichzeitig erfolgt die Aushärtung der in den Dekor- und Kernschichtlagen eingesetzten Imprägnierharze. Nach 20 min. wird der Pressstapel unter Druck rückgekühlt und der Presse entnommen. Die Oberflächeneigenschaften der so erhaltenen Schichtpressstoffplatte sind in der folgenden Tabelle gezeigt.

### Beispiel 2:

Zur Herstellung eines Beschichtungssystems werden in einem Reaktionsgefäß 100 Gewichtsteile einer Mischung der folgenden Komponenten in n-Butylacetat bei einem Gesamtfeststoffgehalt von 76%::
26 Gewichtsteile

   [H₂C=CH-C(O)-O-]ₘR¹-O-C(O)-NH-R²-NH-C(O)-O-R³[-O-C(O)-CH=CH₂]ₙ (A1)

   worin

   R¹ = (-CH₂)₃C-CH₂-

   R² = 3,3,5,5-Tetramethylcyclohexandiyl

   R³ = -CH₂-C(CH₂-)₂-CH₂-CH₃

   und n = 2 und m = 3 ist.
30,5 Gewichtsteile

   [H₂C=CH-C(O)-O-]ₒR⁴ (A2)

   worin R⁴= C(CH₂-)₄ und o = 4 ist;
40,5 Gewichtsteile

   [H₂C=CH-C(O)-O-]ₚR⁵-O-C(O)-NH-R⁶-NH-C(O)-O-R⁷(OH)₂ (B1)

   worin

   R⁵ = (-CH₂)₃C-CH₂-

   R⁶ = 3,3,5,5-Tetramethylcyclohexandiyl

   R⁷ = -CH₂-C(CH₂-)₂-CH₃

   und p = 3 ist;
1,5 Gewichtsteile 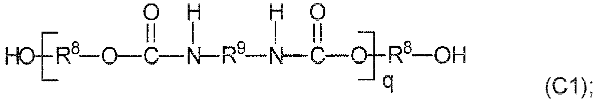 worin

   R⁸ = -CH₂-C(CH₂-CH₃)(CH₂-OH)-(CH₂)-

   R⁹ = 3,3,5,5-Tetramethylcyclohexandiyl

   und q = 3 ist; und 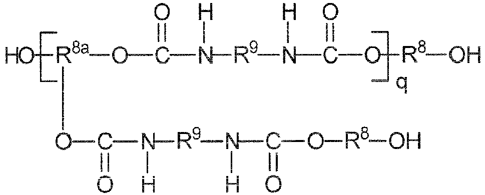 worin

   R⁸ = -CH₂-C(CH₂-CH₃)(CH₂-OH)-(CH₂)-

   R^{8a}= -CH₂-C(CH₂-CH₃)(CH₂-)-(CH₂)-

   R⁹ = 3,3,5,5-Tetramethylcyclohexandiyl

   und q = 3 ist; und
1,5 Gewichtsteile
   D: ausgehärtetes Harnstoff-Formaldehyd-Harz mit einem Molekulargewicht Mn von > 1000 g/mol]
   mit 28 Gew.-Teilen einer Härterkomponente in Form eines trimerisierten Hexamethylendiisocyanats mit einem Isocyanat-Äquivalentgewicht von 195 gemischt und mit 0,1 Gewichtsteilen tert. Butylperbenzoat als Radikalbildner versetzt. Die Halbwertszeit von tert. Butylperbenzoat beträgt bei 140°C ca. 10 Minuten. Diesem Beschichtungssystem können ferner die für Beschichtungssysteme bekannten Zusatzstoffe wie Verlaufmittel, Entschäumer, Lichtschutzmittel, Entgasungsmittel zugegeben werden. Die Gebrauchsdauer des Beschichtungssystems liegt bei 1 - 1,5 Stunden.

Anschließend wird das Beschichtungssystem wie in Beispiel 1 auf ein Oberflächenmaterial aufgetragen, und eine Schichtpressstoffplatte hergestellt. Die Oberflächeneigenschaften der so erhaltenen Schichtpressstoffplatte sind in der folgenden Tabelle gezeigt.

### Beispiel 3:

Zur Herstellung eines Beschichtungssystems werden in einem Reaktionsgefäß 100 Gewichtsteile einer Mischung der folgenden Komponenten in n-Butylacetat bei einem Gesamtfeststoffgehalt von 82%:
35 Gewichtsteile

   [H₂C=CH-C(O)-O-]ₘR¹-O-C(O)-NH-R²-NH-C(O)-O-R³[-O-C(O)-CH=CH₂], (A1);

   worin

   R¹ = (-CH₂)₃C-CH₂-

   R2 = -CH₂-C(CH₃)(CH₃)-CH₂-CH(CH₃)-CH₂-CH₂-

   R³ = -CH₂-C(CH₂-)₃

   und n = 3 und m = 3 ist;
25,8 Gewichtsteile

   [H₂C=CH-C(O)-O-]ₒR⁴ (A2)

   worin R⁴= C(CH₂-)₄ und o = 4 ist;
34 Gewichtsteile

   [H₂C=CH-C(O)-O-]ₚR⁵-O-C(O)-NH-R⁶-NH-C(O)-O-R⁷(OH)₂ (B1)

   worin

   R⁵ = (-CH₂)₃C-CH₂-

   R⁶ = -CH₂-C(CH₃)(CH₃)-CH₂-CH(CH₃)-CH₂-CH₂-

   R⁷ = -CH₂-C(CH₂-)₂-CH₃

   und p = 3 ist;
0,8 Gewichtsteile 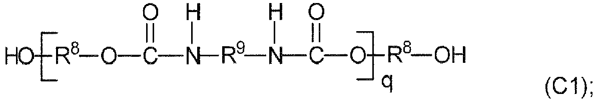 worin

   R⁸ = -CH₂-C(CH₂-CH₃)(CH₂-OH)-(CH₂)-

   R⁹ = -CH₂-C(CH₃)(CH₃)-CH₂-CH(CH₃)-CH₂-CH₂-

   und q = 3 ist, und 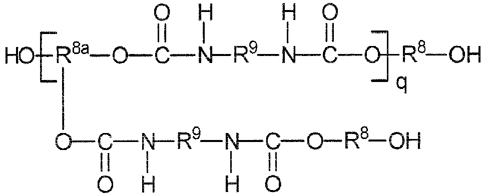 worin

   R⁸ = -CH₂-C(CH₂-CH₃)(CH₂-OH)-(CH₂)-

   R⁹ = -CH₂-C(CH₃)(CH₃)-CH₂-CH(CH₃)-CH₂-CH₂-

   R^{8a}= -CH₂-C(CH₂-CH₃)(CH₂-)-(CH₂)-

   und q = 3 ist.
4,4 Gewichtsteile
   D: ausgehärtetes Harnstoff-Formaldehyd-Harz mit einem Molekulargewicht Mn von > 1000 g/mol]
   mit 28 Gew.-Teilen einer Härterkomponente in Form eines trimerisierten Hexamethylendiisocyanats mit einem Isocyanat-Äquivalentgewicht von 195 gemischt und mit 0,1 Gewichtsteilen tert. Butylperbenzoat als Radikalbildner versetzt. Die Halbwertszeit von tert. Butylperoxyd beträgt bei 140°C ca. 10 Minuten. Diesem Beschichtungssystem können ferner die für Beschichtungssysteme bekannten Zusatzstoffe wie Verlaufmittel, Entschäumer, Lichtschutzmittel, Entgasungsmittel zugegeben werden. Die Gebrauchsdauer des Beschichtungssystems liegt bei 1 - 1,5 Stunden.

Anschließend wird das Beschichtungssystem wie in Beispiel 1 auf ein Oberflächenmaterial aufgetragen, und eine Schichtpressstoffplatte hergestellt. Die Oberflächeneigenschaften der so erhaltenen Schichtpressstoffplatte sind in der folgenden Tabelle gezeigt.

### Beispiel 4:

Zur Herstellung eines Beschichtungssystems werden in einem Reaktionsgefäß 100 Gewichtsteile einer Mischung der folgenden Komponenten in n-Butylacetat bei einem Gesamtfeststoffgehalt von 75%::
29,4 Gewichtsteile

   [H₂C=CH-C(O)-O-]ₘR¹-O-C(O)-NH-R²-NH-C(O)-O-R³[-O-C(O)-CH=CH₂]ₙ (A1);

   worin

   R¹ = (-CH₂)₃C-CH₂-

   R2 = -CH₂-C(CH₃)(CH₃)-CH₂-CH(CH₃)-CH₂-CH₂-

   R³ = -CH₂-C(CH₂-)₂-CH₂-CH₃

   und n = 2 und m = 3 ist.
31,5 Gewichtsteile

   [H₂C=CH-C(O)-O-]ₒR⁴ (A2)

   worin R⁴= C(CH₂-)₄ und o = 4 ist;
33 Gewichtsteile

   [H₂C=CH-C(O)-O-]ₚR⁵-O-C(O)-NH-R⁶-NH-C(O)-O-R⁷(OH)₂ (B1)

   worin

   R5 = (-CH₂)₃C-CH₂-

   R⁶ = -CH₂-C(CH₃)(CH₃)-CH₂-CH(CH₃)-CH₂-CH₂-

   R⁷ = -CH₂-C(CH₂-)₂-CH₃

   und p = 3 ist;
2,0 Gewichtsteile 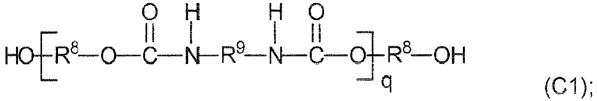 worin

   R⁸ = -CH₂-C(CH₂-CH₃)(CH₂-OH)-(CH₂)-

   R⁹ = -CH₂-C(CH₃)(CH₃)-CH₂-CH(CH₃)-CH₂-CH₂-

   und q = 3 ist. und 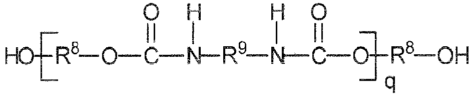 worin

   R⁸ = -CH₂-C(CH₂-CH₃)(CH₂-OH)-(CH₂)-

   R⁹ = -CH₂-C(CH₃)(CH₃)-CH₂-CH(CH₃)-CH₂-CH₂-

   R^{8a}= -CH₂-C(CH₂-CH₃)(CH₂-)-(CH₂)-

   und q = 3 ist.
4,1 Gewichtsteile
   D: ausgehärtetes Harnstoff-Formaldehyd-Harz mit einem Molekulargewicht Mn von > 1000 g/mol]
   mit 28 Gew.-Teilen einer Härterkomponente in Form eines trimerisierten Hexamethylendiisocyanats mit einem Isocyanat-Äquivalentgewicht von 195 gemischt und mit 0,1 Gewichtsteilen tert. Butylperbenzoat als Radikalbildner versetzt. Die Halbwertszeit von tert. Butylperoxyd beträgt bei 140°C ca. 10 Minuten. Diesem Beschichtungssystem können ferner die für Beschichtungssysteme bekannten Zusatzstoffe wie Verlaufmittel, Entschäumer, Lichtschutzmittel, Entgasungsmittel zugegeben werden. Die Gebrauchsdauer des Beschichtungssystems liegt bei 1 - 1,5 Stunden.

Anschließend wird das Beschichtungssystem wie in Beispiel 1 auf ein Oberflächenmaterial aufgetragen, und eine Schichtpressstoffplatte hergestellt. Die Oberflächeneigenschaften der so erhaltenen Schichtpressstoffplatte sind in der folgenden Tabelle gezeigt.

| | Beispiel 1 | Beispiel 2 | Beispiel 3 | Beispiel 4 |
|---|---|---|---|---|
| Bewitterung nach EN 438-2.29:2005 | nach 3500h: Grauskala 5 Aussehen 5 | nach 3500h: Grauskala 4 Aussehen 5 | nach 3500h: Grauskala 4 Aussehen 5 | nach 3500h: Grauskala 4-5 Aussehen 5 |
| Kratzfestigkeit nach EN 438-2.25:2005 | 7 N | 6 N | 6 N | 7 N |
| Glanzgradveränderung bei 85° nach Bewitterung nach EN 438-2.29:2005 nach 3500 h gemessen nach EN ISO 2813 | 2,0 units bzw. 15% vom Ausgangswert | 1,6 units bzw. 11% vom Ausgangswert | 2,5 units bzw. 18% vom Ausgangswert | 2,1 units bzw. 16% vom Ausgangswert |
| Chemikalienbeständ igkeit nach EN 438-2.26:2005 | Grad 5 | Grad 5 | Grad 5 | Grad 5 |
| Gehalt an N aus -N-CO-N- Gruppen bezogen auf den gesamten N-Gehalt nach EN ISO 10993-18:2009 | 11 % | 5% | 14 % | 13 % |

## Patentansprüche

1. Verfahren zur Herstellung einer Schichtpressstoffplatte mit einer Kernlage und einer polymerbeschichteten Oberflächenlage an mindestens einer Plattenoberfläche, wobei die Oberflächenlage als äußerste Schicht eine Polymerbeschichtung mit einem Polyurethan(meth)acrylat-Polymer aufweist und wobei das Verfahren die folgenden Schritte umfasst:
a) Auftragen eines Beschichtungssystems als Beschichtung auf ein Oberflächenmaterial für eine Schichtpressstoffplatte, wobei das Beschichtungssystem eine Harzkomponente, eine Härterkomponente sowie optionale Zusatzstoffe umfasst,
wobei die Harzkomponente als Gemisch aus den Komponenten A bis D vorliegt, in dem
Komponente A eine polymerisierbare (Meth)acrylatverbindung ist, die pro Molekül mindestens 2 Gruppen mit einer (meth)acrylischen Doppelbindung und keine Hydroxygruppen aufweist,
Komponente B eine polymerisierbare (Meth)acrylatverbindung ist, die pro Molekül sowohl eine oder mehrere Gruppen mit einer (meth)acrylischen Doppelbindung als auch mindestens 2 Hydroxygruppen aufweist,
Komponente C ein Polyurethan-Präpolymer ist, das pro Molekül mindestens 2 Hydroxygruppen und keine Isocyanatgruppen aufweist,
Komponente D ein Harz mit Aminoplast-Gerüststruktur ist, das pro Molekül mindestens 2 Hydroxygruppen aufweist;
und wobei die Härterkomponente ein mindestens difunktionelles Isocyanat ist; und
b) Trocknen des in Schritt a) beschichteten Oberflächenmaterials bei einer erhöhten Temperatur, bei der eine Reaktion der Hydroxygruppen in der Harzkomponente mit den Isocyanatgruppen der Härterkomponente stattfindet, so dass sich in der Beschichtung ein Polyurethan-Polymer bildet, das Gruppen mit einer (meth)acrylischen Doppelbindung aufweist;
c) Bereitstellen eines Pressstapels, der ein Material zum Bilden einer Kernlage einer Schichtpressstoffplatte, das eine oder mehrere Lagen eines mit härtbarem Kunstharz imprägnierten Trägermaterials umfasst, und der das in Schritt b) erhaltene beschichtete Oberflächenmaterial als Oberflächenlage enthält, so dass zumindest auf einer Seite des Pressstapels das in Schritt b) erhaltene Oberflächenmaterial die äußerste Lage bildet und die getrocknete Beschichtung auf mindestens einer Oberfläche des Pressstapels vorliegt;
d) Verpressen des Pressstapels bei erhöhtem Druck und einer Temperatur oberhalb der Trocknungstemperatur des Schritts b), so dass eine Polymerisation der (meth)acrylischen Doppelbindungen in der getrockneten Beschichtung stattfindet und eine Schichtpressstoffplatte mit einer Kernlage und einer Oberflächenlage an mindestens einer Plattenoberfläche gebildet wird, die als äußerste Schicht eine Polymerbeschichtung mit einem Polyurethan(meth)acrylat-Polymer aufweist.

2. Verfahren zur Herstellung eines polymerbeschichteten Oberflächenmaterials für eine Schichtpressstoffplatte, umfassend die Schritte:
Auftragen eines Beschichtungssystems als Beschichtung auf ein Oberflächenmaterial für eine Schichtpressstoffplatte, wobei das Beschichtungssystem eine Harzkomponente, eine Härterkomponente sowie optionale Zusatzstoffe umfasst,
wobei die Harzkomponente als Gemisch aus den Komponenten A bis D vorliegt, in dem
Komponente A eine polymerisierbare (Meth)acrylatverbindung ist, die pro Molekül mindestens 2 Gruppen mit einer (meth)acrylischen Doppelbindung und keine Hydroxygruppen aufweist,
Komponente B eine polymerisierbare (Meth)acrylatverbindung ist, die pro Molekül sowohl eine oder mehrere Gruppen mit einer (meth)acrylischen Doppelbindung als auch mindestens 2 Hydroxygruppen aufweist,
Komponente C ein Polyurethan-Präpolymer ist, das pro Molekül mindestens 2 Hydroxygruppen und keine Isocyanatgruppen aufweist,
Komponente D ein Harz mit Aminoplast-Gerüststruktur ist, das pro Molekül mindestens 2 Hydroxygruppen aufweist;
und wobei die Härterkomponente ein mindestens difunktionelles Isocyanat ist; und
Trocknen des beschichteten Oberflächenmaterials bei einer erhöhten Temperatur, bei der eine Reaktion der Hydroxygruppen in der Harzkomponente mit den Isocyanatgruppen der Härterkomponente stattfindet, so dass sich in der Beschichtung ein Polyurethan-Polymer bildet, das Gruppen mit einer (meth)acrylischen Doppelbindung aufweist, und gegebenenfalls zusätzlich nach dem Trocknen das Polymerisieren der (meth)acrylischen Doppelbindungen in der getrockneten Beschichtung bei einer Temperatur, die oberhalb der Trocknungstemperatur liegt, so dass sich in der Beschichtung ein Polyurethan(meth)acrylatPolymer bildet.

3. Verfahren gemäß einem der Ansprüche 1 oder 2, wobei die Verbindung der Komponente A neben den Gruppen mit einer (meth)acrylischen Doppelbindung keine weiteren reaktiven Gruppen aufweist.

4. Verfahren gemäß einem der Ansprüche 1 bis 3, wobei die (Meth)acrylatverbindung der Komponente A eine Verbindung der folgenden Formel (A1) umfasst:
[H₂C=CH-C(O)-O-]ₘR¹-O-C(O)-NH-R²-NH-C(O)-O-R³[-O-C(O)-CH=CH₂]ₙ (A1);
worin R¹ und R³ unabhängig voneinander ausgewählt sind aus einer aliphatischen Kohlenwasserstoffgruppe, einer aliphatischen Polyethergruppe und einer aliphatischen Polyestergruppe, R² eine aliphatische oder cycloaliphatische Kohlenwasserstoffgruppe ist, n = 2-9 und m = 2-9 ist.

5. Verfahren gemäß einem der Ansprüche 1 bis 4, wobei die (Meth)acrylatverbindung der Komponente A eine Verbindung der folgenden Formel (A2) umfasst:
[H₂C=CH-C(O)-O-]ₒR⁴ (A2)
worin R⁴ eine aliphatische Kohlenwasserstoffgruppe ist, und o = 2-6 ist.

6. Verfahren gemäß einem der Ansprüche 1 bis 5, wobei die (Meth)acrylatverbindung der Komponente B eine Verbindung der folgenden Formel (B1) umfasst:
[H₂C=CH-C(O)-O-]ₚR⁵-O-C(O)-NH-R⁶-NH-C(O)-O-R⁷(OH)₂ (B1)
worin R⁵ ausgewählt ist aus einer aliphatischen Kohlenwasserstoffgruppe, einer alphatischen Polyethergruppe und einer aliphatischen Polyestergruppe, R⁶ und R⁷ unabhängig voneinander ein aliphatischer oder cycloaliphatischer Kohlenwasserstoffrest sind und p = 2-9 ist.

7. Verfahren gemäß einem der Ansprüche 1 bis 6, wobei das Polyurethan-Präpolymer der Komponente C neben den Hydroxygruppen keine weiteren reaktiven Gruppen aufweist.

8. Verfahren gemäß einem der Ansprüche 1 bis 7, wobei das Polyurethan-Präpolymer der Komponente C eine Verbindung der Formel (C1) und/oder (C2) umfasst: 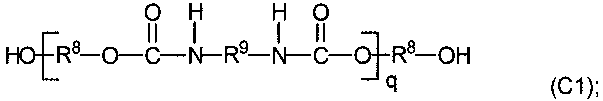 worin R⁸ unabhängig voneinander bei jedem Auftreten ausgewählt ist aus einer aliphatischen Kohlenwasserstoffgruppe, die mit einer oder mehreren Hydroxylgruppen substituiert sein kann, einer aliphatischen Polyethergruppe und einer aliphatischen Polyestergruppe, R⁹ unabhängig voneinander bei jedem Auftreten eine aliphatische oder cycloaliphatische Kohlenwasserstoffgruppe ist, und q 2-9 ist; 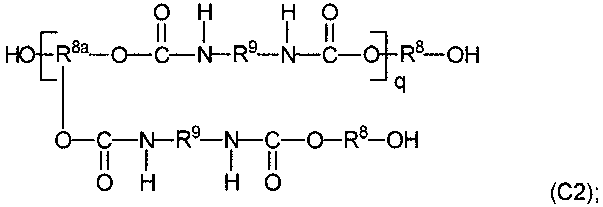 worin R⁸ und R^{8a} unabhängig voneinander bei jedem Auftreten ausgewählt sind aus einer aliphatischen Kohlenwasserstoffgruppe, die mit einer oder mehreren OH-Gruppen substituiert sein kann, einer aliphatischen Polyethergruppe und einer aliphatischen Polyestergruppe, R⁹ unabhängig voneinander bei jedem Auftreten eine aliphatische oder cycloaliphatische Kohlenwasserstoffgruppe ist, und q 2-9 ist.

9. Verfahren gemäß einem der Ansprüche 1 bis 8, wobei das Harz mit Aminoplast-Gerüststruktur der Komponente D ein Harz mit Harnstoff-Formaldehyd-Harzgerüststruktur ist.

10. Verfahren gemäß einem der Ansprüche 1 bis 9, wobei in der Harzkomponente die Komponente A in einer Menge von 40,0 bis 80,0 Gew.%, die Komponente B in einer Menge von 19,0 bis 55,0 Gew.%, die Komponente C in einer Menge von 0,5 bis 5 Gew.% und die Komponente D in einer Menge von 0,5 bis 7 Gew.%, bezogen auf das Gesamtgewicht der Harzkomponente als 100 Gew.%, vorliegt.

11. Verfahren nach einem der Ansprüche 1 bis 10, wobei das Trocknen bei einer Temperatur von 130 °C oder weniger durchgeführt wird.

12. Verfahren nach einem der Ansprüche 1 bis 11, wobei die Temperatur zur Polymerisation der (meth)acrylischen Doppelbindungen oberhalb von 130 °C liegt.

13. Verfahren gemäß einem der Ansprüche 1 und 3 bis 12, wobei Schritt d) in einer Heißpresse durchgeführt wird, die mit einer strukturgebenden Oberfläche versehen ist und die der Schichtpressstoffplatte eine Oberflächenstruktur verleiht.

14. Schichtpressstoffplatte mit einer Kernlage und einer polymerbeschichteten Oberflächenlage an mindestens einer Plattenoberfläche, die als äußerste Schicht eine Polymerbeschichtung mit einem Polyurethan(meth)acrylat-Polymer aufweist, und die erhältlich ist durch das Verfahren nach einem der Ansprüche 1 und 3 bis 13,
wobei die polymerbeschichtete Oberflächenlage eine Kratzfestigkeit von ≥ 6N, gemessen nach EN 438-2.25, und eine Änderung des Glanzgrades nach einer Bewitterung von 3500h nach dem Verfahren EN 438-2.29, gemessen nach EN ISO 2813 bei einem Winkel von 85°, von nicht mehr als 5 units aufweist, und chemikalienbeständig mit Grad ≥4 gemessen nach EN 438-2.26:2005 ist.

15. Verwendung eines Beschichtungssystems wie in Anspruch 1 definiert, in einem Verfahren zur Herstellung einer dekorativen Oberfläche **dadurch gekennzeichnet, dass** diese Oberfläche, die das Polyurethan(meth)acrylat-Polymer enthält, eine Kratzfestigkeit von ≥ 6N, gemessen nach EN 438-2.25, und eine Änderung des Glanzgrades nach einer Bewitterung von 3500h nach dem Verfahren EN 438-2.29, gemessen nach EN ISO 2813 bei einem Winkel von 85°, von nicht mehr als 5 units, aufweist und chemikalienbeständig mit Grad 5, gemessen nach EN 438-2.26:2005 ist.

## Claims

1. Method for the production of a high pressure laminate panel having a core layer and a polymer-coated surface layer on at least one panel surface, wherein the surface layer has as the outermost layer a polymer coating with a polyurethane(meth)acrylate polymer and wherein the method comprises the following steps:
a) applying a coating system as a coating on a surface material for a high pressure laminate panel, wherein the coating system comprises a resin component, a hardener component, and optional additives,
wherein the resin component is present as a mixture of components A to D, in which
component A is a polymerizable (meth)acrylate compound having at least 2 groups with a (meth)acrylic double bond and no hydroxy groups per molecule,
component B is a polymerizable (meth)acrylate compound having one or more groups with a (meth)acrylic double bond as well as at least 2 hydroxy groups per molecule,
component C is a polyurethane prepolymer having at least 2 hydroxy groups and no isocyanate groups per molecule,
component D is a resin with an aminoplast structure having at least 2 hydroxy groups per molecule;
and wherein the hardener component is an at least difunctional isocyanate; and
b) drying the surface material coated in step a) at an elevated temperature at which a reaction takes place between the hydroxy groups in the resin component and the isocyanate groups of the hardener component so that a polyurethane polymer having groups with a (meth)acrylic double bond is formed in the coating;
c) providing a laminate stack containing a material for the formation of a core layer of a high pressure laminate panel, which material comprises one or more layers of a carrier material impregnated with a curable synthetic resin, and containing the coated surface material obtained in step b) as a surface layer so that at least on one side of the laminate stack the surface material obtained in step b) forms the outermost layer, and the dried coating is present on at least one surface of the laminate stack;
d) pressing the laminate stack at increased pressure and at a temperature above the drying temperature of step b) so that a polymerization of the (meth)acrylic double bonds in the dried coating takes place and a high pressure laminate panel with a core layer and a surface layer on at least one panel surface is formed which has a polymer coating with a polyurethane(meth)acrylate polymer as the outermost layer.

2. Method for the production of a polymer-coated surface material for a high pressure laminate panel comprising the steps:
applying a coating system as a coating on a surface material for a high pressure laminate panel, wherein the coating system comprises a resin component, a hardener component, and optional additives,
wherein the resin component is present as a mixture of components A to D, in which
component A is a polymerizable (meth)acrylate compound having at least 2 groups with a (meth)acrylic double bond and no hydroxy groups per molecule,
component B is a polymerizable (meth)acrylate compound having one or more groups with a (meth)acrylic double bond as well as at least 2 hydroxy groups per molecule,
component C is a polyurethane prepolymer having at least 2 hydroxy groups and no isocyanate groups per molecule,
component D is a resin with an aminoplast structure having at least 2 hydroxy groups per molecule;
and wherein the hardener component is an at least difunctional isocyanate; and
drying the surface material at an elevated temperature at which a reaction takes place between the hydroxy groups in the resin component and the isocyanate groups of the hardener component so that a polyurethane polymer is formed in the coating which comprises groups with a (meth)acrylic double bond, and, in addition, after drying optionally polymerizing the (meth)acrylic double bonds in the dried coating at a temperature above the drying temperature so that a polyurethane(meth)acrylate polymer is formed in the coating.

3. Method according to claim 1 or 2, wherein the compound of component A does not comprise any other reactive groups in addition to the groups with a (meth)acrylic double bond.

4. Method according to any one of claims 1 to 3, wherein the (meth)acrylate compound of component A comprises a compound of the following formula (A1):
[H₂C=CH-C(O)-O-]ₘR¹-O-C(O)-NH-R²-NH-C(O)-O-R³[-O-C(O)-CH=CH₂]ₙ (A1);
wherein R¹ and R³ are independently selected from an aliphatic hydrocarbon group, an aliphatic polyether group, and an aliphatic polyester group, R² is an aliphatic or cycloaliphatic hydrocarbon group, n = 2-9, and m = 2-9.

5. Method according to any one of claims 1 to 4, wherein the (meth)acrylate compound of component A comprises a compound of the following formula (A2):
[H₂C=CH-C(O)-O-]ₒR⁴ (A2)
wherein R⁴ is an aliphatic hydrocarbon group, and o = 2-6.

6. Method according to any one of claims 1 to 5, wherein the (meth)acrylate compound of component B comprises a compound of the following formula (B1):
[H₂C=CH-C(O)-O-]ₚR⁵-O-C(O)-NH-R⁶-NH-C(O)-O-R⁷(OH)₂ (B1)
wherein R⁵ is selected from an aliphatic hydrocarbon group, an aliphatic polyether group, and an aliphatic polyester group, R⁶ and R⁷ are independently an aliphatic or cycloaliphatic hydrocarbon group, and p = 2-9.

7. Method according to any one of claims 1 to 6, wherein the polyurethane prepolymer of component C does not comprise any other reactive groups in addition to the hydroxy groups.

8. Method according to any one of claims 1 to 7, wherein the polyurethane prepolymer of component C comprises a compound of the formula (C1) and/or (C2): 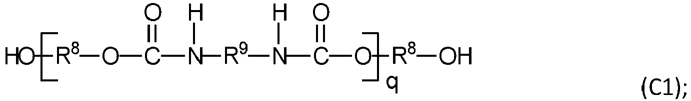 wherein R⁸, independently at every occurrence, is selected from an aliphatic hydrocarbon group which may be substituted with one or more hydroxyl groups, an aliphatic polyether group, and an aliphatic polyester group, R⁹, independently at every occurrence, is an aliphatic or cycloaliphatic hydrocarbon group, and q is 2-9; 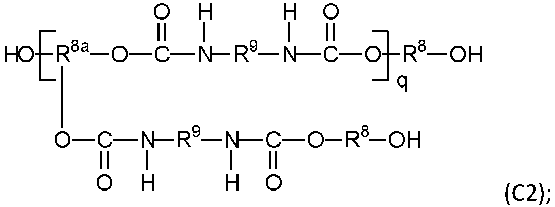 wherein R⁸ and R^{8a}, independently at every occurrence, are selected from an aliphatic hydrocarbon group, which may be substituted with one or more OH groups, an aliphatic polyether group, and an aliphatic polyester group, R⁹, independently at every occurrence, is an aliphatic or cycloaliphatic hydrocarbon group, and q is 2-9.

9. Method according to any one of claims 1 to 8, wherein the resin with an aminoplast structure of component D is a resin with a urea-formaldehyde resin structure.

10. Method according to any one of claims 1 to 9, wherein in the resin component, component A is present in an amount of 40.0 to 80.0 wt.%, component B is present in an amount of 19.0 to 55.0 wt.%, component C is present in an amount of 0.5 to 5 wt.%, and component D is present in an amount of 0.5 to 7 wt.%, based on the total weight of the resin component as 100 wt.%.

11. Method according to any one of claims 1 to 10, wherein drying is carried out at a temperature of 130°C or less.

12. Method according to any one of claims 1 to 11, wherein the temperature for the polymerization of the (meth)acrylic double bonds is above 130°C.

13. Method according to any one of claims 1 and 3 to 12, wherein step d) is carried out in a hot press equipped with a structuring surface which imparts a surface structure to the high pressure laminate panel.

14. High pressure laminate panel with a core layer and a polymer-coated surface layer on at least one panel surface, which as the outermost layer has a polymer coating with a polyurethane(meth)acrylate polymer and which is obtainable by the method according to any one of claims 1 and 3 to 13,
wherein the polymer-coated surface layer exhibits a scratch resistance of ≥ 6N, measured according to EN 438-2.25, and a change in the degree of gloss of no more than 5 units after 3,500 hours of weathering according to the process of EN 438-2.29, measured according to EN ISO 2813 at an angle of 85°, and a chemical resistance level of ≥4, measured according to EN 438-2.26:2005.

15. Use of a coating system as defined in claim 1 in a method for the production of a decorative surface, **characterized in that** this surface, which contains the polyurethane(meth)acrylate polymer, exhibits a scratch resistance of ≥ 6N, measured according to EN 438-2.25, and a change in the degree of gloss of no more than 5 units after 3,500 hours of weathering according to the process of EN 438-2.29, measured according to EN ISO 2813 at an angle of 85°, and a chemical resistance level of 5, measured according to EN 438-2.26:2005.

## Revendications

1. Procédé de production d'un panneau stratifié ayant une couche centrale et une couche de surface revêtue de polymère sur au moins une surface de panneau, la couche de surface comprenant, en tant que couche la plus externe, un revêtement polymère avec un polymère de (méth)acrylate de polyuréthane et ledit procédé comprenant les étapes suivantes :
a) dépôt d'un système de revêtement en tant que revêtement sur un matériau de surface pour un panneau stratifié, le système de revêtement comprenant un composant résine, un composant durcisseur, ainsi que des additifs éventuels,
le composant résine se présentant sous forme de mélange des composants A à D, dans lequel
le composant A est un composé de (méth)acrylate polymérisable, qui comprend par molécule au moins 2 groupes ayant une double liaison (méth)acrylique et aucun groupe hydroxy,
le composant B est un composé de (méth)acrylate polymérisable, qui comprend par molécule aussi bien un ou plusieurs groupes ayant une double liaison (méth)acrylique qu'au moins 2 groupes hydroxy,
le composant C est un prépolymère de polyuréthane, qui comprend par molécule au moins 2 groupes hydroxy et aucun groupe isocyanate,
le composant D est une résine ayant une structure principale aminoplaste, qui comprend par molécule au moins 2 groupes hydroxy ;
et le composant durcisseur étant un isocyanate au moins bifonctionnel ; et
b) séchage du matériau de surface revêtu à l'étape a) à une température élevée, où a lieu une réaction des groupes hydroxy dans le composant résine avec les groupes isocyanate du composant durcisseur de sorte qu'un polymère de polyuréthane se forme dans le revêtement, lequel comprend des groupes ayant une double liaison (méth)acrylique ;
c) mise à disposition d'un empilement à presser contenant un matériau destiné à former une couche centrale d'un panneau stratifié, qui comprend une ou plusieurs couches d'un matériau de support imprégné d'une résine synthétique durcissable, et qui contient le matériau de surface revêtu obtenu à l'étape b) en tant que couche de surface de sorte que le matériau de surface obtenu à l'étape b) forme la couche la plus externe au moins sur une face de l'empilement à presser et que le revêtement séché se présente sur au moins une surface de l'empilement à presser ;
d) compression de l'empilement à presser à pression élevée et à une température supérieure à la température de séchage de l'étape b) de telle sorte qu'une polymérisation des doubles liaisons (méth)acryliques ait lieu dans le revêtement séché et qu'un panneau stratifié ayant une couche centrale et une couche de surface soit formé sur au moins une surface des panneaux, qui présente en tant que couche la plus externe un revêtement polymère ayant un polymère de (méth)acrylate de polyuréthane.

2. Procédé de production d'un matériau de surface revêtu de polymère pour un panneau stratifié, comprenant les étapes de :
dépôt d'un système de revêtement en tant que revêtement sur un matériau de surface pour un panneau stratifié, ledit système de revêtement comprenant un composant résine, un composant durcisseur, ainsi que des additifs éventuels,
le composant résine se présentant sous forme de mélange des composants A à D, dans lequel
le composant A est un composé de (méth)acrylate polymérisable, qui comprend par molécule au moins 2 groupes ayant une double liaison (méth)acrylique et aucun groupe hydroxy,
le composant B est un composé de (méth)acrylate polymérisable, qui comprend par molécule aussi bien un ou plusieurs groupes ayant une double liaison (méth)acrylique qu'au moins 2 groupes hydroxy,
le composant C est un prépolymère de polyuréthane, qui comprend par molécule au moins 2 groupes hydroxy et aucun groupe isocyanate,
le composant D est une résine ayant une structure principale aminoplaste, qui comprend par molécule au moins 2 groupes hydroxy ;
et le composant durcisseur étant un isocyanate au moins bifonctionnel ; et
séchage du matériau de surface revêtu à une température élevée, où a lieu une réaction des groupes hydroxy dans le composant résine avec les groupes isocyanate du composant durcisseur de sorte qu'un polymère de polyuréthane se forme dans le revêtement, lequel comprend des groupes ayant une double liaison (méth)acrylique, et le cas échéant, en plus, après le séchage, polymérisation des doubles liaisons (méth)acryliques dans le revêtement séché à une température qui est supérieure à la température de séchage de telle sorte qu'un polymère de (méth)acrylate de polyuréthane se forme dans le revêtement.

3. Procédé selon l'une des revendications 1 ou 2, dans lequel le composé du composant A ne comprend, en plus des groupes ayant une double liaison (méth)acrylique, aucun autre groupe réactif.

4. Procédé selon l'une des revendications 1 à 3, dans lequel le composé de (méth)acrylate du composant A comprend un composé de formule suivante (A1) :
[H₂C=CH-C(O)-O-]ₘR¹-O-C(O)-NH-R²-NH-C(O)-O-R³[-O-C(O)-CH=CH₂]ₙ (A1);
dans laquelle R¹ et R³ sont choisis indépendamment l'un de l'autre parmi un groupe hydrocarboné aliphatique, un groupe polyéther aliphatique et un groupe polyester aliphatique, R² est un groupe hydrocarboné aliphatique ou cycloaliphatique, n = 2 - 9 et m = 2 - 9.

5. Procédé selon l'une des revendications 1 à 4, dans lequel le composé de (méth)acrylate du composant A comprend un composé de formule suivante (A2) :
[H₂C=CH-C(O)-O-]ₒR⁴ (A2)
dans laquelle R⁴ est un groupe hydrocarboné aliphatique, et o = 2 - 6.

6. Procédé selon l'une des revendications 1 à 5, dans lequel le composé de (méth)acrylate du composant B comprend un composé de formule suivante (B1) :
[H₂C=CH-C(O)-O-]ₚR⁵-O-C(O)-NH-R⁶-NH-C(O)-O-R⁷(OH)₂ (B1)
dans laquelle R⁵ est choisi parmi un groupe hydrocarboné aliphatique, un groupe polyéther aliphatique et un groupe polyester aliphatique, R⁶ et R⁷ sont indépendamment l'un de l'autre un résidu hydrocarboné aliphatique ou cycloaliphatique et p = 2 - 9.

7. Procédé selon l'une des revendications 1 à 6, dans lequel le prépolymère de polyuréthane du composant C ne comprend, en plus des groupes hydroxy, aucun autre groupe réactif.

8. Procédé selon l'une des revendications 1 à 7, dans lequel le prépolymère de polyuréthane du composant C comprend un composé de formule (C1) et/ou (C2) : 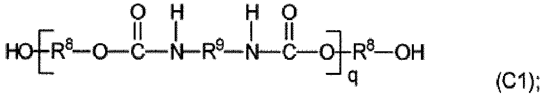 dans laquelle R⁸ est choisi indépendamment l'un de l'autre à chaque occurrence parmi un groupe hydrocarboné aliphatique, qui peut être substitué par un ou plusieurs groupes hydroxyle, un groupe polyéther aliphatique et un groupe polyester aliphatique, R⁹ est indépendamment l'un de l'autre à chaque occurrence un groupe hydrocarboné aliphatique ou cycloaliphatique et q est 2 - 9 ; 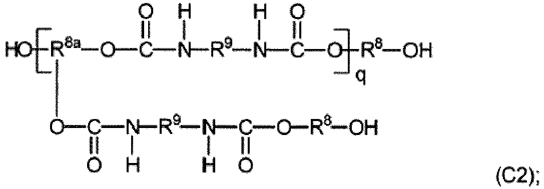 dans laquelle R⁸ et R^{8a} sont choisis indépendamment l'un de l'autre à chaque occurrence parmi un groupe hydrocarboné aliphatique, qui peut être substitué par un ou plusieurs groupes OH, un groupe polyéther aliphatique et un groupe polyester aliphatique, R⁹ est indépendamment l'un de l'autre à chaque occurrence un groupe hydrocarboné aliphatique ou cycloaliphatique et q est 2 - 9.

9. Procédé selon l'une des revendications 1 à 8, dans lequel la résine ayant une structure principale aminoplaste du composant D est une résine ayant une structure principale de résine urée-formaldéhyde.

10. Procédé selon l'une des revendications 1 à 9, dans lequel, dans le composant résine, le composant A est présent en une quantité de 40,0 à 80,0 % en poids, le composant B en une quantité de 19,0 à 55,0 % en poids, le composant C en une quantité de 0,5 à 5 % en poids et le composant D en une quantité de 0,5 à 7 % en poids, par rapport au poids total du composant résine représentant 100 % en poids.

11. Procédé selon l'une des revendications 1 à 10, dans lequel le séchage est réalisé à une température de 130°C ou moins.

12. Procédé selon l'une des revendications 1 à 11, dans lequel la température pour la polymérisation des doubles liaisons (méth)acryliques est supérieure à 130°C.

13. Procédé selon l'une des revendications 1 et 3 à 12, dans lequel l'étape d) est réalisée dans une presse chauffante, qui est pourvue d'une surface structurante, et qui confère au panneau stratifié une structure de surface.

14. Panneau stratifié ayant une couche centrale et une couche de surface revêtue d'un polymère sur au moins une surface de panneau, qui présente comme couche la plus externe un revêtement polymère avec un polymère de (méth)acrylate de polyuréthane, et qui peut être obtenu par le procédé selon l'une des revendications 1 et 3 à 13, dans lequel la couche de surface revêtue de polymère présente une résistance aux rayures de ≥ 6 N, mesurée d'après EN 438-2.25, et une modification du degré de brillance après 3500 h d'intempéries d'après le procédé EN 438-2.29, mesurée d'après la norme EN ISO 2813 à un angle de 85°, de pas plus de 5 unités, et présente une résistance aux produits chimiques d'un degré ≥ 4, mesurée d'après EN 438-2.26 : 2005.

15. Utilisation d'un système de revêtement tel que défini selon la revendication 1, dans un procédé de production d'une surface décorative, **caractérisée en ce que** ladite surface contenant le polymère de (méth)acrylate de polyuréthane présente une résistance aux rayures de ≥ 6 N, mesurée d'après EN 438-2.25, et une modification du degré de brillance après 3500 h d'intempéries d'après le procédé EN 438-2.29, mesurée d'après la norme EN ISO 2813 à un angle de 85°, de pas plus de 5 unités, et présente une résistance aux produits chimiques d'un degré de 5, mesurée d'après EN 438-2.26 : 2005.
